# EUROPÄISCHE PATENTSCHRIFT

(11) **EP 2 853 431 B1**
(45) Veröffentlichungstag und Bekanntmachung des Hinweises auf die Patenterteilung: **14.11.2018**
(21) Anmeldenummer: 14176257.5
(22) Anmeldetag: 09.07.2014
(51) Int. Cl.: B60K 17/02, B60K 17/28, F16H 3/08, F16H 3/00

(54) **Zapfwellengetriebe für eine landwirtschaftliche Arbeitsmaschine**
Power take-off shaft drive for an agricultural work machine
Transmission de prise de force pour machine agricole

(30) Priorität: 19.09.2013 DE 102013110316
(43) Veröffentlichungstag der Anmeldung: 01.04.2015
(73) Patentinhaber: CLAAS Tractor S.A.S., 78141 Vélizy-Villacoublay Cedex (FR)
(72) Erfinder: Wieckhorst, Jan Carsten, 33098 Paderborn (DE); Birkmann, Christian, 33775 Versmold (DE); Surmann, Sebastian, 33824 Werther (DE); Wendt, Timo, 33175 Bad Lippspringe (DE)
(74) Vertreter: Budach, Steffen

(56) Entgegenhaltungen:
- EP-A1- 1 757 834
- EP-A2- 1 798 096
- DE-A1- 4 027 508
- FR-A1- 2 642 016
- FR-A1- 2 838 798

## Beschreibung

Die Erfindung betrifft ein Zapfwellengetriebe für eine landwirtschaftliche Arbeitsmaschine gemäß Anspruch 1. Weiterhin betrifft die Erfindung eine landwirtschaftliche Arbeitsmaschine gemäß Anspruch 10, eine Kombination aus einer Arbeitsmaschine und einem Arbeitsgerät gemäß Anspruch 12 sowie ein Verfahren zum Bremsen einer Zapfwelle nach Anspruch 16.

Landwirtschaftliche Arbeitsmaschinen wie insbesondere Traktoren sind üblicherweise mit einer Zapfwelle zum Antrieb eines anbaubaren Arbeitsgeräts ausgestattet. Dabei wird die Antriebsleistung eines Hauptantriebsmotors des Traktors unter anderem für den Betrieb der Zapfwelle bereitgestellt.

Bei derzeit üblichen Zapfwellenantriebskonzepten kann der Hauptantriebsmotor beispielsweise über fixe Übersetzungen mit der Zapfwelle verbunden werden. Zur Erzielung einer für das Arbeitsgerät gewünschten Normdrehzahl der Zapfwelle muss der Hauptantriebsmotor dann im Bereich seiner Nenndrehzahl betrieben werden. Folglich gibt die für den Arbeitsprozess vorgesehene Zapfwellendrehzahl die Drehzahl des Hauptantriebsmotors vor.

Um bei Zapfwellenarbeiten mit geringem Leistungsbedarf mit abgesenkter Dieselmotordrehzahl zu arbeiten und auf diese Weise den Betriebspunkt im Motorkennfeld in Bereiche mit geringerem spezifischen Kraftstoffverbrauch zu verschieben, existieren Sparzapfwellen, sogenannte E-Zapfwellen, mit entsprechend angepasster Übersetzung. Abhängig vom jeweiligen Hersteller bzw. der jeweiligen Ausstattung werden so bis zu vier Zapfwellengänge (z.B.: 540/540e/1000/1000e) realisiert. Diese lassen sich üblicherweise jedoch nicht unter Last wechseln, so dass die Sparzapfwellen bei Feldarbeiten mit nur zeitweise hohem Leistungsbedarf (z.B. Erntebetrieb mit Ballenpressen) gar nicht genutzt werden können.

Darüber hinaus führt das Anlaufen von Anbaugeräten mit hohen Trägheitsmomenten (z.B. Quaderballenpressen) und/oder Lastmomenten (z.B. Futtermischwagen) zu starken Belastungen beim Kupplungsvorgang, da aufgrund der fehlenden Lastschaltbarkeit häufig in einem Zapfwellengang mit einer geringen Übersetzung angefahren werden muss.

Aus der EP 1757834 A1 ist eine Hydraulikventileinrichtung eines Arbeitsfahrzeugs mit einem Antriebsmechanismus für eine Zapfwelle bekannt, welche eine hydraulische Zapfwellenbremse aufweist und deren Arbeitsweise die Verfahrensmerkmale des Oberbegriffs des Anspruchs 15 offenbart. Aus der DE 10 2011 084 623 A1 ist ein Getriebe für eine Zapfwelle bekannt. Bei diesem sind eine Getriebeantriebswelle sowie zwei damit kuppelbare Eingangswellen koaxial auf einer Achse angeordnet, um über verschiedene wählbare Getriebegangstufen, die jeweils durch eine Stirnradpaarung gebildet werden, eine dazu versetzte Zapfwelle antreiben zu können. Das so beschriebene Zapfwellengetriebe ist zumindest teilweise (jeweils bei Wechsel der Eingangswelle) unter Last schaltbar. Nachteilig ist die verhältnismäßig große axiale Baulänge des Zapfwellengetriebes, bedingt durch die in axialer Richtung nebeneinander angeordneten Stirnradpaarungen für jeweils eine Getriebegangstufe. Zudem sind zumindest für das erste und zweite der Ausführungsbeispiele eine Doppelkupplungseinheit sowie eine Hohlwellenanordnung erforderlich, die jeweils technisch aufwändig und daher kostenträchtig sind. Beim dritten Ausführungsbeispiel entfallen zwar Doppelkupplungseinheit und Hohlwellenanordnung, jedoch sind zur Erzielung von vier Getriebegangstufen vier Reibkupplungen sowie eine komplexe Ansteuerung erforderlich.

Es ist eine Aufgabe der vorliegenden Erfindung, ein lastschaltbares Zapfwellengetriebe für eine landwirtschaftliche Arbeitsmaschine anzugeben, das gegenüber bekannten Zapfwellengetrieben eine verringerte axiale Baulänge aufweist und günstig herstellbar ist.

Aus der EP 1 798 096 A1, in der die Merkmale des Oberbegriffs von Anspruch 1 enthalten sind, ist ein Nutzfahrzeug mit einem antreibbaren Antriebsstrang, durch welchen über eine erste Mehrscheiben-Kupplung eine Achse antreibbar ist, und einer Abtriebswelle bekannt, die von dem Antriebsstrang mit einer Geschwindigkeit antreibbar ist, die proportional zu der Geschwindigkeit des Fahrzeuges gegenüber dem Boden ist. In einem Antriebspfad von dem Antriebsstrang zu der Abtriebswelle ist dabei eine zweite Mehrscheiben-Kupplung angeordnet, wobei die zweite Kupplung ein Antriebselement besitzt, welches antriebsmäßig mit dem Antriebsstrang verbunden ist, und dass die beiden Mehrscheiben-Kupplungen gemeinsam betätigt werden.

Die Aufgabe wird gelöst durch ein Zapfwellengetriebe mit den Merkmalen des Anspruchs 1. Dieses zeichnet sich aus durch ein erstes Teilgetriebe, dem eine erste Getriebewelle zugeordnet ist, und mindestens ein weiteres, insbesondere zweites, Teilgetriebe, dem eine von der ersten Getriebewelle beabstandete weitere, insbesondere zweite, Getriebewelle zugeordnet ist, wobei jede der Getriebewellen über zumindest eine Getriebegangstufe mit einer gemeinsamen Zapfwelle in Antriebsverbindung bringbar ist und wobei jede der Getriebewellen durch Schließen einer dem jeweiligen Teilgetriebe zugeordneten Reibkupplung mit einer Eingangswelle des Zapfwellengetriebes in Antriebsverbindung bringbar ist.

Erfindungsgemäß wurde zunächst erkannt, dass an dem typischen Einbauort für ein Zapfwellengetriebe an einer landwirtschaftlichen Arbeitsmaschine, nämlich insbesondere im Bereich hinter der Hinterachse, nur ein beschränkter Bauraum zur Verfügung steht. Soll das Zapfwellengetriebe dennoch eine bestimmte Anzahl schaltbarer Getriebegangstufen aufweisen, so ist eine kompakte Bauform des Getriebes erforderlich. Diese wird erfindungsgemäß auf vorteilhafte Weise erreicht, indem das Zapfwellengetriebe zumindest zwei Teilgetriebe mit voneinander beabstandeten Getriebewellen aufweist, die mit einer gemeinsamen Zapfwelle in Antriebsverbindung bringbar sind. Daraus ergibt sich eine aufgelöste Bauform des zumindest zweifach kuppelbaren Zapfwellengetriebes, was verschiedene Vorteile mit sich bringt.

Zunächst kann eine Getriebegangstufe eines Teilgetriebes auf gleicher axialer Höhe wie eine Getriebegangstufe des jeweils anderen Teilgetriebes angeordnet werden, indem diese beispielsweise mit einem gemeinsamen an der Zapfwelle angeordneten Zahnrad gebildet werden. Eine verhältnismäßig kurze axiale Bauform ist die Folge, da auf der axialen Baulänge einer herkömmlichen Getriebegangstufe nun zumindest zwei (oder bei entsprechender Ausführung sogar mehr) Getriebegangstufen untergebracht werden können. Weiterhin können die den Teilgetrieben zugeordneten Reibkupplungen aufgrund der aufgelösten Getriebebauweise parallel angeordnet werden, so dass eine nochmals verkürzte axiale Baulänge des Zapfwellengetriebes möglich ist. Schließlich ergibt sich aus der Bauform eine technisch verhältnismäßig einfache sowie günstige Herstellbarkeit des Zapfwellengetriebes, unter anderem da je Teilgetriebe eine einfache Reibkupplung sowie einfache Vollwellen eingesetzt werden können. Die Anzahl möglicher Getriebegangstufen wird dabei zumindest nicht durch die Anzahl der Reibkupplungen beschränkt. Zudem ist es einfach möglich, für die Teilgetriebe eine hohe Anzahl von Gleich- oder zumindest Ähnlichteilen zu verwenden. Gemäß einer bevorzugten Weiterbildung der Erfindung umfasst das Zapfwellengetriebe zwei Teilgetriebe, d.h. ein erstes Teilgetriebe und ein zweites Teilgetriebe.

Zur weiteren Erhöhung möglicher erzielbarer Getriebegangstufen bei gegebener axialer Baulänge ist es gleichwohl denkbar, dass das Zapfwellengetriebe drei oder mehr Teilgetriebe aufweist.

Es sei angemerkt, dass eine Getriebegangstufe grundsätzlich jedwede Anordnung von Getriebegliedern umfassen kann, mit denen sich eine Übersetzung zwischen zwei Wellen darstellen lässt. Denkbar sind in diesem Zusammenhang insbesondere Rad-(Stirnrad-, Reibrad-), Riemen- (Zahnriemen-) und/oder Kettentriebe.

Gemäß einer bevorzugten Weiterbildung lässt sich das Zapfwellengetriebe unter Last schalten, indem während des Öffnens der Reibkupplung eines Teilgetriebes die jeweils dem anderen Teilgetriebe zugeordnete Reibkupplung geschlossen wird, so dass eine über eines der Teilgetriebe bestehende Antriebsverbindung zwischen Eingangswelle und Zapfwelle durch eine über das jeweils andere Teilgetriebe herzustellende Antriebsverbindung ersetzbar ist, ohne eine Antriebsverbindung zwischen Eingangswelle und Zapfwelle zu unterbrechen. Dem Zapfwellengetriebe ist zweckmäßigerweise eine Steuereinrichtung zugeordnet, die betreibbar ist, beim Wechsel der Getriebegangstufe die Reibkupplungen in entsprechender Weise zu anzusteuern bzw. zu regeln.

In konstruktiver Hinsicht lässt sich die beschriebene Funktionsweise des Zapfwellengetriebes vorteilhaft umsetzen, indem die erste Getriebewelle mittels der dem ersten Teilgetriebe zugeordneten Reibkupplung mit einer ersten Antriebswelle kuppelbar ist und die weitere Getriebewelle mittels der dem weiteren Teilgetriebe zugeordneten Reibkupplung mit einer weiteren Antriebswelle kuppelbar ist, wobei die erste und die weitere Antriebswelle Teil eines von der Eingangswelle antreibbaren Zwischengetriebes sind. Das Zwischengetriebe übernimmt dabei insbesondere die Aufgabe, die erste und die weitere Antriebswelle, die jeweils mit der ersten und der weiteren Getriebewelle kuppelbar sind, über eine gemeinsame Eingangswelle antreiben zu können. Gemäß einer bevorzugten Weiterbildung, fällt dabei die Eingangswelle mit der ersten Antriebswelle des Zapfwellengetriebes zusammen.

Das Zwischengetriebe kann unterschiedlich gestaltet sein. Insbesondere stellt dieses jeweils eine Übersetzung zwischen der Eingangswelle und der ersten Antriebswelle sowie zwischen der Eingangswelle und der weiteren Antriebswelle bereit. Konstruktiv kann dies auf verschiedene Weise umgesetzt sein, beispielsweise durch ein Stirnradgetriebe, einen Ketten- bzw. Riementrieb oder dergleichen. Wenn die Eingangswelle koaxial auf einer Achse mit der ersten oder der weiteren Antriebswelle angeordnet ist, insbesondere mit dieser zusammenfällt, bietet sich ein direkter Durchtrieb (Übersetzung=1) an. Gemäß einer bevorzugten Weiterbildung des Zapfwellengetriebe handelt es sich bei dem Zwischengetriebe um ein Stirnradgetriebe, bei dem eine erste Welle und eine dazu parallele weitere Welle in einem festen Übersetzungsverhältnis zueinander stehen, bei insbesondere gleichem Drehsinn der Wellen. Vorzugsweise ist dabei das Übersetzungsverhältnis zwischen der ersten Welle und der weiteren Welle ungleich 1. Auf diese Weise lässt sich ein Stufensprung zwischen geraden und ungeraden Getriebegangstufen einfach realisieren.

Vorteilhaft ist der ersten und der weiteren Getriebewelle jeweils zumindest ein Zahnrad zugeordnet, das mit einem der Zapfwelle zugeordneten Zahnrad kämmt, so dass zwischen der Zapfwelle und der jeweiligen Getriebewelle ein festes Drehzahlverhältnis im Sinne einer Gangstufe herstellbar ist.

Besonders bevorzugt ist jede der Getriebewellen über mehrere, vorzugsweise über jeweils zwei oder drei schaltbare Getriebegangstufen mit der gemeinsamen Zapfwelle in Antriebsverbindung bringbar. Dies lässt sich konstruktiv vorteilhaft umsetzen, indem der Getriebewelle mehrere Zahnräder zugeordnet sind, die jeweils mit einem der Zapfwelle zugeordneten Zahnrad kämmen, um als Paar von Zahnrädern je eine schaltbare Getriebegangstufe zu bilden, wobei zur Vorwahl einer Getriebegangstufe das betreffende Zahnrad durch Stellmittel drehfest mit der Getriebewelle und/oder der Zapfwelle verbindbar ist.

Gemäß einer weiteren Ausführung sind der ersten Getriebewelle mehrere Zahnräder zugeordnet, die jeweils mit einem der Zapfwelle zugeordneten Zahnrad kämmen, wobei zur Vorwahl einer Getriebegangstufe ein oder mehrere der Zahnräder durch Stellmittel drehfest mit der Getriebewelle und/oder der Zapfwelle verbindbar ist, um als Anordnung von Zahnrädern eine schaltbare Getriebegangstufe zu bilden. In diesem Fall ist es demnach zusätzlich möglich, dass die Antriebsverbindung einer Getriebegangstufe nicht allein über genau eine der Getriebewellen und die Zapfwelle hergestellt wird, sondern dass diese über zumindest zwei Getriebewellen und die Zapfwelle hergestellt wird. Dazu ist es erforderlich, dass ein der Zapfwelle zugeordnetes Zahnrad in einen gegenüber der Zapfwelle losen Zustand bringbar ist, um in kämmendem Eingriff mit Zahnrädern zumindest zweier Getriebewellen Antriebsleistung von einer der Getriebewellen zur jeweils anderen zu übertragen. Es bietet sich hiermit die Möglichkeit, bei gleicher Anzahl von Zahnrädern - und damit unveränderter Baugröße - die Anzahl schaltbarer Gänge zu erhöhen.

Der grundsätzliche Aufbau des Zapfwellengetriebes mit einem ersten Teilgetriebe und zumindest einem weiteren Teilgetriebe, deren Getriebewellen voneinander beabstandet sind (aufgelöste Bauweise), bietet die Möglichkeit einer annähernd symmetrischen Getriebearchitektur. Dies erleichtert nicht nur die Montage des Getriebes, sondern ermöglicht die teilweise Verwendung gleicher Maschinenelemente (Gleichteile) oder zumindest ähnlicher Maschinenelemente (Ähnlichteile) in den Teilgetrieben. In diesem Zusammenhang seien Bauteile genannt wie unter anderem Eingangswellen, Zahnräder, Reibkupplungen, Getriebewellen, Schaltmuffen.

Das beschriebene Zapfwellengetriebe ist unter Last in verschiedene Übersetzungen schaltbar. Vorteilhaft lässt sich die Übersetzung des Zapfwellengetriebes in Abhängigkeit zumindest eines Betriebsparameters der Arbeitsmaschine einstellen.

Der Erfindung betrifft weiterhin eine landwirtschaftliche Arbeitsmaschine, insbesondere in Form eines Traktors, mit einem Antriebsmotor und einem wie zuvor beschriebenen Zapfwellengetriebe, wobei das Zapfwellengetriebe über eine Getriebeantriebswelle von dem Antriebsmotor antreibbar ist.

Bei der Arbeitsmaschine kann zwischen der Getriebeantriebswelle und der Eingangswelle des Zapfwellengetriebes, bei welcher es sich insbesondere um die erste Antriebswelle handelt, eine Kupplung, insbesondere eine formschlüssig arbeitende Kupplung wie eine Schaltmuffe oder dergleichen angeordnet sein. Durch diese Maßnahme lässt sich die Antriebsverbindung zwischen Antriebsmotor und Zapfwellengetriebe bei Bedarf auf einfache und kostengünstige Weise trennen bzw. wieder herstellen.

Weiterhin betrifft die Erfindung eine Kombination aus einer Arbeitsmaschine und einem mit der Zapfwelle des Zapfwellengetriebes in Antriebsverbindung stehenden Anbaugerät.

Dabei ist zum Anfahren eines im Stillstand befindlichen Arbeitsgeräts vorteilhaft das Zapfwellengetriebe betreibbar, bei jeweils vorgewählter, zweckmäßigerweise niedriger Getriebegangstufe in jedem der Teilgetriebe gleichzeitig beide Reibkupplungen zu schließen, um über eine Reibkupplung ein Drehmoment von der ersten Antriebswelle auf die erste Getriebewelle und um über eine Reibkupplung ein Drehmoment von der weiteren Antriebswelle auf die weitere Getriebewelle zu übertragen, spätestens bis an einer der Reibkupplungen ein Gleichlauf erreicht ist. Ein solches Anfahren unter Nutzung beider Reibkupplungen bietet den Vorteil, dass für den Kupplungsvorgang die Reibflächen beider Reibkupplungen genutzt werden und sich eine für das Anfahren (zumindest bis ein Gleichlauf an einer der Reibkupplungen erreicht ist) zu übertragende Leistung auf die beiden Teilgetriebe, d.h. das erste und das weitere Teilgetriebe, verteilt.

Neben der Erzielung einer geeigneten Betriebsdrehzahl der Zapfwelle während des Betriebs eines anbaubaren Arbeitsgeräts ist es wünschenswert, die Drehzahl oder zumindest den Zustand der Zapfwelle auch in anderen Einsatzsituationen wie beispielsweise am Feldende, bei Transportfahrt oder in Gefahrensituationen schnell verringern zu können. Insbesondere kann es in den genannten Situationen wünschenswert sein, die Zapfwelle innerhalb kurzer Zeit zum Stillstand zu bringen.

Abhängig vom angebauten Arbeitsgerät können bei einem gewünschten Stillsetzen der Zapfwelle mit angebautem Arbeitsgerät jedoch hohe Nachlaufzeiten auftreten. Diese treten insbesondere dann auf, wenn der Antriebsstrang mit angebautem Arbeitsgerät eine hohe Trägheit aufweist, beispielsweise bei an die Arbeitsmaschine angebauten Ballenpressen oder Kreisel- bzw. Trommelmähwerken. Die hohen Nachlaufzeiten können eine erhöhte Sicherheitsgefahr darstellen, wenn sich beispielsweise ein Maschinenbediener oder Dritte in der Nähe bewegter Maschinenteile aufhalten. Ein Warten auf den tatsächlichen Stillstand führt andererseits zu einem meist unerwünschten Zeitverlust während des Ernteeinsatzes.

Eine für sich gesehen bekannte Möglichkeit zum Stillsetzen der Zapfwelle besteht darin, der Zapfwelle ein zusätzliches Bremselement zuzuschalten, um die Zapfwelle auf diese Weise zu bremsen. Das zusätzliche Bremselement sowie eine dazu erforderliche Betätigungseinrichtung stellen jedoch einen zusätzlichen konstruktiven Aufwand sowie einen damit verbundenen Kostennachteil dar. Zudem verursacht ein bloßes Abbremsen der Zapfwelle ein in der Situation zumeist ungewolltes Stillsetzen (umgangssprachlich: "Abwürgen") des Antriebsmotors.

Dementsprechend betrifft die Erfindung weiterhin ein Verfahren zum Bremsen einer Zapfwelle gemäß Anspruch 15. Das Verfahren ermöglicht ein Abbremsen der Zapfwelle einer landwirtschaftlichen Arbeitsmaschine ohne die Notwendigkeit zusätzlicher aufwendiger Bauteile, insbesondere ohne die Notwendigkeit eines zusätzlichen Bremselements, und zeichnet sich aus durch die Schritte:
Unterbrechen einer Antriebsverbindung zwischen der Zapfwelle und einem Antriebsmotor der Arbeitsmaschine,
gleichzeitiges Kuppeln einer mit der Zapfwelle in festem Drehzahlverhältnis stehenden ersten Getriebewelle und einer mit der Zapfwelle in festem Drehzahlverhältnis stehenden zweiten Getriebewelle an ein Zwischengetriebe, das ein vom Drehzahlverhältnis der Getriebewellen untereinander abweichendes Übersetzungsverhältnis aufweist.

Durch das erfindungsgemäß vorgesehene Unterbrechen der Antriebsverbindung zwischen Zapfwelle und Antriebsmotor wird zunächst sichergestellt, dass die Zapfwelle antriebsmäßig vom Antriebsmotor entkoppelt ist. Die Entkopplung gewährleistet zum einen, dass der Antriebsmotor durch das Stillsetzen der Zapfwelle nicht auch zum Stillstand gezwungen ("abgewürgt") wird. Zum anderen ermöglicht die vollständige Trennung des Zapfwellenantriebs vom Antriebsmotor die Verringerung von Reibungs-, Schlepp- und Planschverlusten bei Nichtgebrauch der Zapfwelle. Das Unterbrechen der Antriebsverbindung lässt sich auf konstruktiv einfache und somit kostengünstige Weise mittels einer einfachen formschlüssig arbeitenden Kupplung, wie z.B. einer Schaltmuffe, realisieren.

Das eigentliche Abbremsen der Zapfwelle erfolgt dadurch, dass eine mit der Zapfwelle in festem Drehzahlverhältnis stehende erste Getriebewelle und eine mit der Zapfwelle in festem Drehzahlverhältnis stehende zweite Getriebewelle an ein Zwischengetriebe gekuppelt werden, das ein vom Drehzahlverhältnis der Getriebewellen untereinander abweichendes Übersetzungsverhältnis aufweist. Konkret werden dazu die beiden fest von der (sich noch drehenden) Zapfwelle angetriebenen Getriebewellen gleichzeitig beispielsweise an die Ein- und Ausgangswelle eines Zwischengetriebes gekuppelt. Auf diese Weise werden zwei in festem Drehzahlverhältnis zueinander stehende Wellen (die erste und zweite Getriebewelle) dadurch abgebremst, dass diese mit einem parallelen Getriebeweg in Form des Zwischengetriebes gekuppelt werden, das ein vom Drehzahlverhältnis der ersten und zweiten Getriebewelle untereinander abweichendes Übersetzungsverhältnis aufweist. Das Abbremsen der Zapfwelle erfolgt demnach durch Abbau der Relativdrehzahlen während beider gleichzeitig stattfindender Kupplungsvorgänge. Es ergibt sich der vorteilhafte Effekt, dass für das Bremsen keine zusätzliche Bremseinrichtung und keine zusätzliche Aktorik benötigt wird. Für den Bremsvorgang können die Reibkräfte beider Kupplungsvorgänge genutzt werden, wodurch eine besonders effektive Bremswirkung erzielbar ist.

Zweckmäßigerweise bildet die Zapfwelle den Getriebeausgang eines mehrere, insbesondere zwei Teilgetriebe umfassenden Mehrkupplungsgetriebes, insbesondere eines Doppelkupplungsgetriebes wie zuvor anhand des Zapfwellengetriebes beschrieben. Doppelkupplungsgetriebe ermöglichen auf vorteilhafte Weise einen Gangwechsel ohne Unterbrechung der Zugkraft. Dabei ist jedes der Teilgetriebe mittels einer dem jeweiligen Teilgetriebe zugeordneten Reibungskupplung zuschaltbar, um mit einer jeweils eingelegten Getriebegangstufe eine Antriebsverbindung zwischen Antriebsmotor und Zapfwelle herzustellen.

Gemäß einer vorteilhaften Ausgestaltung ist die erste Getriebewelle einem ersten Teilgetriebe und die weitere Getriebewelle einem weiteren Teilgetriebe des Mehrkupplungsgetriebes zugeordnet.

Zur Durchführung des Vorgangs des gleichzeitigen Kuppelns werden zweckmäßigerweise zeitgleich die erste Getriebewelle mit einer ersten Welle und die weitere Getriebewelle mit einer weiteren Welle gekuppelt, wobei die erste Welle und die weitere Welle Teil des Zwischengetriebes sind und in einem festen Übersetzungsverhältnis zueinander stehen. In konstruktiver Hinsicht wird der gleichzeitige Kupplungsvorgang vorteilhaft durch gleichzeitiges Schließen einer zwischen der ersten Welle und der weiteren Getriebewelle wirkenden Reibkupplung und einer zwischen der weiteren Welle und der weiteren Getriebewelle wirkenden Reibkupplung durchgeführt.

Es sind grundsätzlich unterschiedliche Bauformen des Zwischengetriebes denkbar. Gemäß einer technisch günstig umsetzbaren Bauform handelt es sich bei dem Zwischengetriebe um ein Stirnradgetriebe, bei dem eine erste Welle und eine dazu parallele weitere Welle in einem festen Übersetzungsverhältnis zueinander stehen, bei vorzugsweise gleichem Drehsinn der Wellen. Ein gleicher Drehsinn lässt sich beispielsweise dadurch erzielen, dass das Zwischengetriebe als dreigliedriges Stirnradgetriebe ausgeführt ist. In vorteilhafter Weise wird das Zwischengetriebe im angetriebenen Zustand der Zapfwelle, d.h. bei Antrieb über einen Antriebsmotor, dazu genutzt, Antriebsleistung vom Antriebsmotor zu einem oder zu beiden der Teilgetriebe zu übertragen.

Die vorgesehene Unterbrechung der Antriebsverbindung zwischen Zapfwelle kann auf unterschiedliche Weisen erfolgen. Vorteilhaft wird eine zwischen dem Antriebsmotor und dem Zapfwellengetriebe angeordnete Kupplung, insbesondere eine formschlüssig arbeitende Kupplung wie eine Schaltmuffe oder dergleichen, geöffnet.

Das Abbremsen der Zapfwelle kann grundsätzlich in verschiedenen Betriebssituationen veranlasst werden. Vorteilhaft wird das Abbremsen in Abhängigkeit eines Betriebszustands der Arbeitsmaschine und/oder eines daran angebauten Arbeitsgeräts ausgelöst. Dazu kann beispielsweise eine Steuereinrichtung vorgesehen sein, die mit Zustandssensoren der Arbeitsmaschine und/oder des Arbeitsgeräts signalverbunden ist. Daneben ist es zweckmäßig, dass eine solche Steuereinrichtung über eine Benutzerschnittstelle manuell bedienbar ist, so dass ein Maschinenbediener das Abbremsen bei Eintreten einer bestimmen Situation nach eigenem Ermessen veranlassen kann.

Die Erfindung wird nachfolgend anhand einer beigefügten Zeichnung erläutert. Dabei wird auch auf weitere vorteilhafte Wirkungen der Erfindung Bezug genommen. In der Zeichnung zeigen:
- Fig. 1: zugleich ein Zapfwellengetriebe, eine landwirtschaftliche Arbeitsmaschine sowie eine Kombination aus einer Arbeitsmaschine und einem Arbeitsgerät in vereinfachter Prinzipdarstellung gemäß einem ersten, nicht erfindungsgemäßen Ausführungsbeispiel,
- Fig. 2: eine schematische Darstellung eines Traktors mit daran angehängter, davon angetriebener Ballenpresse,
- Fig. 3: ein Zapfwellengetriebe gemäß einem zweiten Ausführungsbeispiel der Erfindung,
- Fig. 4: ein Zapfwellengetriebe gemäß einem dritten Ausführungsbeispiel der Erfindung,
- Fig. 5: ein Zapfwellengetriebe gemäß einem vierten Ausführungsbeispiel der Erfindung.

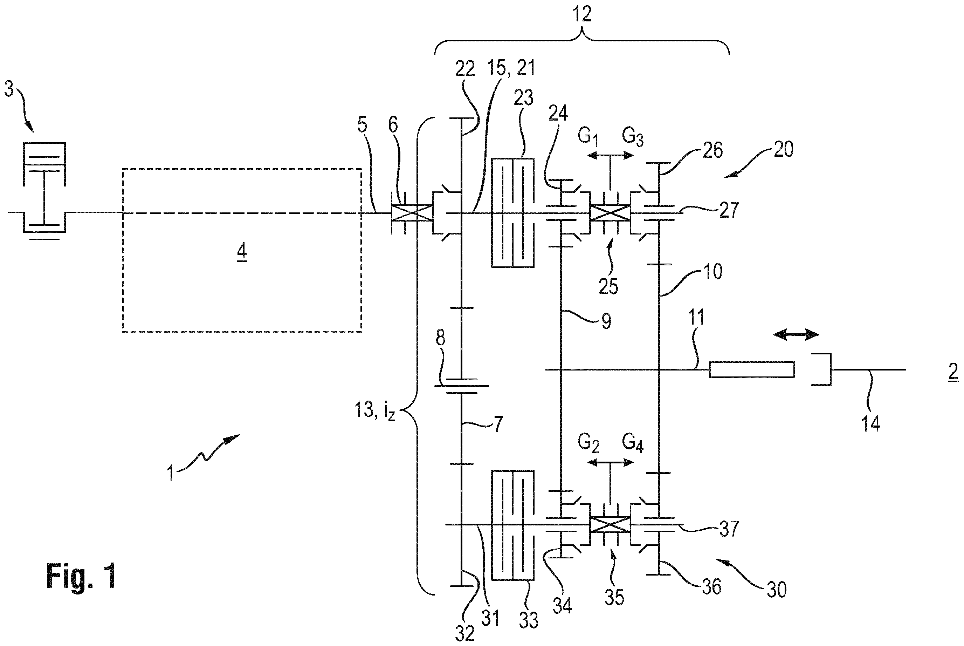

In Fig. 1 sind ein Zapfwellengetriebe 12, eine landwirtschaftliche Arbeitsmaschine, wie beispielsweise ein Traktor 1, sowie eine Kombination aus einer solchen Arbeitsmaschine 1 und einem daran anbaubaren Arbeitsgerät wie beispielsweise einer Ballenpresse 2 in vereinfachter Prinzipdarstellung gemäß einem ersten, nicht erfindungsgemäßen Ausführungsbeispiel gezeigt.

Demnach stellt ein Antriebsmotor 3, zum Beispiel ein Dieselmotor, über eine Getriebeantriebswelle 5 eine Antriebsleistung für ein Zapfwellengetriebe 12 bereit. Daneben stellt der Antriebsmotor 3 Antriebsleistung für beispielsweise einen Fahrantrieb 4 des Traktors 1 bereit.

Die Getriebeantriebswelle 5 ist über eine formschlüssig arbeitende Kupplung, beispielsweise in Form einer Schaltmuffe 6 oder einer Klauenkupplung, mit dem Zapfwellengetriebe 12, insbesondere mit einer Eingangswelle 15 des Zapfwellengetriebes 12 in Antriebsverbindung bringbar. Die Eingangswelle 15 fällt in diesem Ausführungsbeispiel mit einer ersten Antriebswelle 21 eines noch zu erläuternden Teilgetriebes 13 zusammen. Durch Öffnen und Schließen der Schaltmuffe 6 lässt sich eine Antriebsverbindung zwischen dem Antriebsmotor 3 und dem Zapfwellengetriebe 12 unterbrechen bzw. herstellen.

Alternativ könnte die Getriebeantriebswelle 5 ohne Zwischenschaltung eines kuppelbaren Elements mit der Eingangswelle 15 des Zapfwellengetriebes 12 dauerhaft in Antriebsverbindung stehen (nicht gezeigte Variante).

Eingangsseitig weist das Zapfwellengetriebe 12 ein Zwischengetriebe 13 auf, das bei angetriebener Zapfwelle 11 (Kupplung 6 geschlossen) dazu dient, eine in das Zapfwellengetriebe 12 über die Getriebeantriebswelle 5 und die Eingangswelle 15 eingehende Antriebsleistung des Antriebsmotors 3 einem ersten Teilgetriebe 20 und/oder einem zweiten Teilgetriebe 30 bereitstellen zu können, um so die gemeinsame Zapfwelle 11 antreiben zu können.

Das Zwischengetriebe 13 umfasst dazu im Wesentlichen ein Zahnrad 22, das auf einer ersten Antriebswelle 21 angeordnet ist, ein Zahnrad 32, das auf einer dazu parallel beabstandeten zweiten Antriebswelle 31 angeordnet ist, und ein Zwischenrad 7, das um eine zu den Antriebswellen 21, 31 parallele Drehachse 8 drehbar gelagert ist. Die erste Antriebswelle 21 des Zwischengetriebes 13 fällt im gezeigten Ausführungsbeispiel mit der Eingangswelle 15 des Zapfwellengetriebes 12 zusammen. Das Zwischenrad 7 kämmt zugleich mit dem Zahnrad 22 der ersten Antriebswelle 21 und mit dem Zahnrad 32 der zweiten Antriebswelle 31. Die Zahnräder 22 und 32 sowie die damit verbundenen Antriebswellen 21 und 31 des Zwischengetriebes 13 sind aufgrund der aus Zahnrad 22, Zwischenrad 7 und Zahnrad 32 gebildeten Getriebeanordnung antriebsmäßig gekoppelt, d.h. zwischen ihnen besteht ein konstantes Übersetzungsverhältnis i_{Z}.

Insbesondere weisen die Antriebswellen 22 und 32 dabei einen gleichen Drehsinn auf. Wie in der Darstellung angedeutet, weist das Zahnrad 22 einen größeren Durchmesser als das Zahnrad 32 auf mit der Folge, dass die Antriebswelle 31 stets in einem festen Drehzahlverhältnis schneller dreht als die Antriebswelle 21.

Die erste Antriebswelle 21 ist über eine erste Lamellenkupplung 23 mit einer dazu koaxialen ersten Getriebewelle 27 in Antriebsverbindung bringbar. Der ersten Getriebewelle 27 ist ein Satz bestehend aus zwei Zahnrädern 24 und 26 zugeordnet. Die Zahnräder 24 und 26 sind mittels einer dazwischen angeordneten schiebbeweglichen Schaltmuffe 25 mit der ersten Getriebewelle 27 formschlüssig verbindbar. Die Zahnräder 24 und 26 kämmen jeweils mit einem Zahnrad 9 bzw. 10, wobei die Zahnräder 9 und 10 mit der zu der ersten Getriebewelle 27 parallel angeordneten Zapfwelle 11 verbunden sind. Eine aus dem Zahnrad 24 und dem Zahnrad 9 gebildete Zahnradpaarung weist eine andere Übersetzung auf als eine aus dem Zahnrad 26 und dem Zahnrad 10 gebildete Zahnradpaarung. Auf diese Weise bilden die Zahnradpaarungen 24, 9 und die Zahnradpaarungen 26, 10 unterschiedliche Getriebegangstufen Gₙ innerhalb des Zapfwellengetriebes 12. Im gezeigten Ausführungsbeispiel bildet die Zahnradpaarung 24, 9 einen ersten Gang G₁, während die Zahnradpaarung 26, 10 einen dritten Gang G₃ des Zapfwellengetriebes 12 bildet. Somit lassen sich mit Hilfe des ersten Teilgetriebes 20 des Zapfwellengetriebes 12 die Getriebegangstufen G₁ oder G₃ herstellen, indem durch Verschieben der Schaltmuffe 25 ein entsprechender Gang G₁ oder G₃ eingelegt (Vorwahl) und die erste Lamellenkupplung 23 geschlossen wird (Einkuppeln).

Die zweite Antriebswelle 31 ist über eine zweite Lamellenkupplung 33 mit einer dazu koaxialen zweiten Getriebewelle 37 in Antriebsverbindung bringbar. Der zweiten Getriebewelle 37 ist ein Satz bestehend aus zwei Zahnrädern 34 und 36 zugeordnet. Die Zahnräder 34 und 36 sind mittels einer dazwischen angeordneten schiebbeweglichen Schaltmuffe 35 mit der zweiten Getriebewelle 37 formschlüssig verbindbar. Die Zahnräder 34 und 36 kämmen jeweils mit einem Zahnrad 9 bzw. 10, wobei die Zahnräder 9 und 10 mit der zu der zweiten Getriebewelle 37 parallel angeordneten Zapfwelle 11 verbunden sind. Eine aus dem Zahnrad 34 und dem Zahnrad 9 gebildete Zahnradpaarung weist eine andere Übersetzung auf als eine aus dem Zahnrad 36 und dem Zahnrad 10 gebildete Zahnradpaarung. Auf diese Weise bilden die Zahnradpaarungen 34, 9 und die Zahnradpaarungen 36, 10 unterschiedliche Getriebegangstufen Gₙ innerhalb des Zapfwellengetriebes 12. Im gezeigten Ausführungsbeispiel bildet die Zahnradpaarung 34, 9 einen zweiten Gang G₂, während die Zahnradpaarung 36, 10 einen vierten Gang G₄ des Zapfwellengetriebes 12 bildet. Somit lassen sich mit Hilfe des zweiten Teilgetriebes 30 des Zapfwellengetriebes 12 die Getriebegangstufen G₂ oder G₄ herstellen, indem durch Verschieben der Schaltmuffe 35 ein entsprechender Gang G₂ oder G₄ eingelegt (Vorwahl) und die zweite Lamellenkupplung 33 geschlossen wird (Einkuppeln).

Insgesamt weist das Zapfwellengetriebe 12 somit vier Getriebegangstufen G_{1 bis 4} auf, wobei die ungeraden Getriebegangstufen G₁ und G₃ über das erste Teilgetriebe 20 und die geraden Getriebegangstufen G₂ und G₄ über das zweite Teilgetriebe 30 einstellbar sind. Das Zapfwellengetriebe 12 ist zumindest zwischen jeweils einer ungeraden Getriebegangstufe G₁ oder G₃ und einer geraden Getriebegangstufe G₂ oder G₄ unter Last schaltbar. Dies sei nachfolgend erläutert:
Ist beispielsweise die erste Getriebegangstufe G₁ eingelegt und wird die Zapfwelle 11 dabei vom Antriebsmotor 3 angetrieben, so wird Antriebsleistung über die Getriebeantriebswelle 5, die Eingangswelle 15 (identisch mit der ersten Antriebswelle 21), die erste Lamellenkupplung 23 (geschlossen), die erste Getriebewelle 27, das mittels der Schaltmuffe 25 auf der ersten Getriebewelle 27 drehfest geschaltete Zahnrad 24 und das Zahnrad 9 auf die Zapfwelle 11 übertragen. Um nun von der ersten Getriebegangstufe G₁ in die zweite Getriebegangstufe G₂ zu schalten, wird zunächst im zweiten Teilgetriebe 30 die zweite Getriebegangstufe G₂ vorgewählt, indem das Zahnrad 34 mittels der schiebebeweglichen Schaltmuffe 35 auf der zweiten Getriebewelle 37 drehfest geschaltet wird. Nach Vorwahl der Getriebegangstufe G₂ werden die Lamellenkupplungen 23 und 33 gleichzeitig betätigt, wobei die Lamellenkupplung 23 geöffnet wird während die Lamellenkupplung 33 geschlossen wird. Damit wird eine Antriebsverbindung über das zweite Teilgetriebe 30 aufgebaut, während die zuvor über das erste Teilgetriebe 20 bestehende Antriebsverbindung gelöst wird. Nach Abschluss der gleichzeitigen Betätigung beider Lamellenkupplung 23, 33 wird die Antriebsleistung nun ausschließlich über die Getriebeantriebswelle 5, die Eingangswelle 15 (identisch mit der ersten Antriebswelle 21), das Zahnrad 22, das Zwischenrad 7, das Zahnrad 32, die zweite Antriebswelle 31, die zweite Lamellenkupplung 33 (geschlossen), die zweite Getriebewelle 37, das mittels der Schaltmuffe 35 auf der zweiten Getriebewelle 37 drehfest geschaltete Zahnrad 34 und das Zahnrad 9 auf die Zapfwelle 11 übertragen. Der Wechsel zwischen den Getriebegangstufen kann - eine entsprechende Ansteuerung der Lamellenkupplungen 23, 33 vorausgesetzt - ohne Unterbrechung einer Antriebsverbindung zwischen dem Antriebsmotor 3 und der Zapfwelle 11, somit unter Last stattfinden.

Ein zuvor beispielhaft anhand der ersten Getriebegangstufe G₁ und der zweiten Getriebegangstufe G₂ beschriebene Schaltvorgang lässt sich entsprechend auch zwischen anderen Getriebegangstufen sowie in umgekehrter Richtung (von einer höheren in eine niedrigere Getriebegangstufe) durchführen. Soll zwischen zwei geraden (G₂, G₄) oder zwei ungeraden (G₁, G₃) Getriebegangstufen unter Last geschaltet werden, so kann dies vorzugsweise automatisch durch kurzzeitiges Zwischenschalten einer dazwischen liegenden Getriebegangstufe G₂ bzw. G₃ erfolgen.

Eine auf die Zapfwelle 11 übertragene Antriebsleistung ist zum Antrieb eines an den Traktor 1 anbaubaren Arbeitsgeräts wie beispielsweise einer Ballenpresse 2 (in der Fig. nur durch ein Bezugszeichen angedeutet) nutzbar. Die Zapfwelle 11 ist dazu mit einer Antriebswelle 14 der Ballenpresse 2 in eine zur Übertragung von Drehmoment geeignete Antriebsverbindung bringbar (in Fig. angedeutet durch Doppelpfeil), zum Beispiel durch eine formschlüssige Verbindung.

Einige in der Landwirtschaft verwendete Arbeitsgeräte wie insbesondere Ballenpressen 2 weisen in deren Antriebsstrang ein hohes Trägheitsmoment (und/oder Lastmoment) auf. Dementsprechend muss beim Anlaufen beispielsweise einer Ballenpresse 2 ein hohes Drehmoment aufgebracht werden.

Die gezeigte Kombination aus Traktor 1 und Ballenpresse 2 ermöglicht vorteilhaft ein Anlaufen der stillstehenden Ballenpresse 2 unter Nutzung einer nachfolgend beschriebenen Funktionalität des Zapfwellengetriebes 12. Demnach werden bei einer jeweils vorgewählten Getriebegangstufe Gₙ in jedem der Teilgetriebe 20, 30 gleichzeitig beide Lamellenkupplungen 23, 33 geschlossen. Während dieses Schließvorgangs ist es (bei angetriebener Eingangswelle 15 des Zapfwellengetriebes 12) möglich, über die Lamellenkupplung 23 ein Drehmoment von der ersten Antriebswelle 21 auf die erste Getriebewelle 27 und über die zweite Lamellenkupplung 33 ein Drehmoment von der zweiten Antriebswelle 31 auf die zweite Getriebewelle 37 zu übertragen. Die erste Getriebewelle 27 und die zweite Getriebewelle 37 erzeugen über deren jeweils vorgewählte Getriebegangstufe Gₙ an der Zapfwelle ein gleichgerichtetes Drehmoment.

In vorteilhafter Weise stehen für diesen Kupplungsvorgang die Reibflächen beider Lamellenkupplungen 23, 33 zur Verfügung, so dass aufgrund der vergrößerten Reibfläche eine jeweils verringerte Beanspruchung der Lamellenkupplungen 22, 23, und somit ein geringerer Verschleiß an diesen auftritt. Weiterhin ist unter Nutzung beider Lamellenkupplungen 23, 33 bei Bedarf ein besonders hohes Drehmoment an der Zapfwelle 11 erzeugbar. Es können somit auch Ballenpressen 2 - oder allgemein Arbeitsgeräte - mit hohem Trägheitsmoment (und/oder Lastmoment) gestartet werden bzw. kann ein Anlaufen in verkürzter Zeit stattfinden. Der Vorgang des gleichzeitigen Schließens der Lamellenkupplungen 22, 33 wird zweckmäßigerweise nur solange durchgeführt, bis an einer der Lamellenkupplungen 23, 33 ein Gleichlauf erreicht ist.

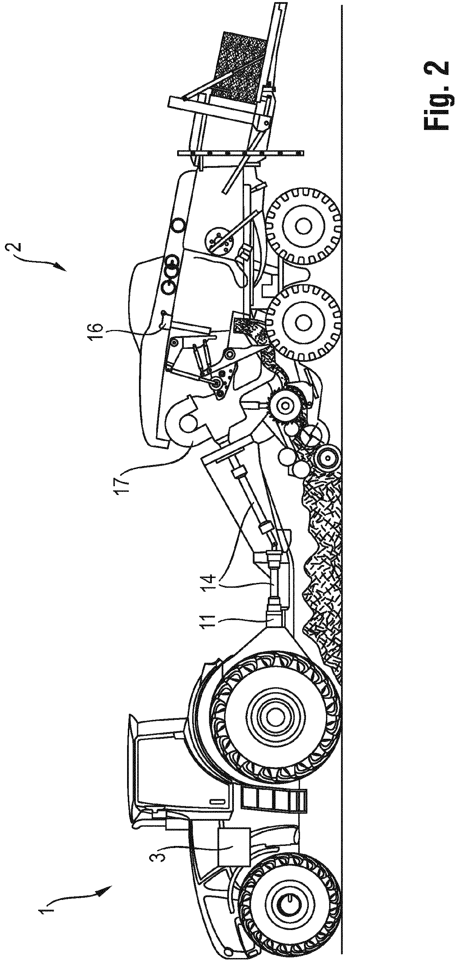

In Fig. 2 ist in schematischer Ansicht eine Situation gezeigt, in welcher ein Traktor 1 über dessen heckseitige Zapfwelle 11 eine vom Traktor 1 gezogene Ballenpresse 2 antreibt. Der in Fig. 2 gezeigte Traktor 1 weist einen Zapfwellenantriebsstrang einschließlich Zapfwellengetriebe 12 wie beispielsweise anhand von Fig. 1 erläutert auf. Die Ballenpresse 2 weist verschiedene Arbeits- und Förderaggregate auf, die während des Ernteeinsatzes, d.h. insbesondere während der Verarbeitung von Erntegut zu gepressten Ballen, mit Antriebsleistung versorgt werden müssen. Unter anderem verfügt die Ballenpresse 2 über ein Hauptgetriebe 17, von dem aus beispielsweise ein oszillierender Presskolben (nicht näher bezeichnet) antreibbar ist. Weitere hier nicht näher zu erläuternde Arbeits- und Förderaggregate können antriebsmäßig mit dem Hauptgetriebe 17 verbunden sein. Das Hauptgetriebe 17 ist über die Antriebswelle 14, die mit der Zapfwelle 11 des Traktors 1 in Antriebsverbindung steht, antreibbar. Bei laufendem Erntebetrieb der Kombination aus Traktor 1 und Ballenpresse 2 wird vom Antriebsmotor 3 des Traktors 1 Antriebsleistung über das Zapfwellengetriebe und die Zapfwelle 11 auf die Antriebswelle 14 der Ballenpresse 2 übertragen, um das Hauptgetriebe 15 und darüber beispielsweise den Presskolben sowie weitere Aggregate der Ballenpresse 2 anzutreiben.

In bestimmten Situationen, wie beispielsweise am Feldende, bei Antritt zu einer Transportfahrt oder in Gefahrensituationen kann es wünschenswert sein, die Drehzahl der Zapfwelle 11 - sowie des damit verbundenen Antriebsstrangs der Ballenpresse 2 - schnell verringern zu können, insbesondere völlig zum Stillstand zu bringen. Ein Stillsetzen kann beispielsweise zweckmäßig sein, um Antriebsleistung einzusparen, wenn die Zapfwelle 11 bzw. das Arbeitsgerät 2 nicht benutzt wird. In Gefahrensituationen kann aus Sicherheitsgründen ein sehr kurzfristiges Stillsetzen angebracht sein, beispielsweise um Unfälle oder Maschinenbeschädigungen durch nachlaufende Maschinenelemente zu verhindern.

Ein aus den verschiedenen traktor- und gerätezugehörigen Komponenten gebildeter Antriebsstrang weist jedoch abhängig von Bauart und -größe allgemein eine nicht unerhebliche Trägheit auf, so dass ein bloßes Trennen der Antriebsverbindung gegenüber dem Antriebsmotor 3 ein langes Nachlaufen der noch in Bewegung befindlichen Komponenten zur Folge hat bis diese aufgrund von Reibung zu Stillstand kommen. Hohe Nachlaufzeiten können jedoch eine erhöhte Sicherheitsgefahr darstellen, wenn sich beispielsweise ein Maschinenbediener oder Dritte in der Nähe bewegter Maschinenteile aufhalten. Ein langes Warten auf den tatsächlichen Stillstand führt andererseits zu einem meist unerwünschten Zeitverlust während des Ernte- oder Arbeitseinsatzes.

Daher lässt sich die Zapfwelle 11 des Traktors 1 - und so auch der damit verbundene Antriebsstrang der Ballenpresse 2 - gemäß folgendem Verfahren aktiv stillsetzen: Zunächst wird eine Antriebsverbindung zwischen der Zapfwelle 11 und dem Antriebsmotor 3 des Traktors 1 unterbrochen. Dies erfolgt insbesondere durch Öffnen der durch die Schaltmuffe 6 gebildeten Kupplung (vgl. Fig. 1). Das Zapfwellengetriebe 12 ist damit vom Antriebsmotor 3 entkoppelt und die Zapfwelle 11 dreht sich in diesem Zustand lediglich aufgrund eigener Trägheit bzw. der Trägheit des mit der Ballenpresse 2 gebildeten Antriebsstrangs weiter.

Anschließend werden die Lamellenkupplungen 23, 33 beider Teilgetriebe 20, 30 bei jeweils eingelegter Getriebegangstufe Gₙ in jedem der Teilgetriebe 20, 30 gleichzeitig geschlossen. Auf diese Weise wird demnach gleichzeitig eine mit der Zapfwelle 11 in festem Drehzahlverhältnis (z. B. Getriebegangstufe G₁ oder G₃) stehende erste Getriebewelle 27 und eine mit der Zapfwelle 11 in festem Drehzahlverhältnis (Getriebegangstufe G₂ oder G₄) stehende zweite Getriebewelle 37 an das Zwischengetriebe 13 gekuppelt. Dies erfolgt insbesondere indem jeweils die erste Getriebewelle 27 mit der ersten Antriebswelle 21 und die zweite Getriebewelle 37 mit der zweiten Antriebswelle 31 des Zwischengetriebes 13 gekuppelt wird. Da erste Antriebswelle 21 und die zweite Antriebswelle 31 zueinander in einem festen Übersetzungsverhältnis i_{Z} stehen, das vom - bei eingelegter Getriebegangstufe Gₙ - ebenfalls festen Drehzahlverhältnis zwischen der ersten Getriebewelle 27 und der zweiten Getriebewelle 37 abweicht, führt das gleichzeitige Kuppeln zu einem Abbau von Relativdrehzahlen in den sich schließenden Lamellenkupplungen 23, 33 und somit zu einem Abbremsen des sich selbst blockierenden Zapfwellengetriebes 12. Ein aktives Bremsen der Zapfwelle 11 und darüber auch des Anbaugeräts (hier: Ballenpresse 2) findet statt. Dabei stehen als wirksame Bremsfläche die Kupplungsflächen beider Lamellenkupplungen 23 und 33 zur Verfügung, so dass eine hohe Bremswirkung erzielbar ist. Lange Nachlaufzeiten von Anbaugeräten können auf diese Weise vermieden und die Sicherheit erhöht werden.

Das so durchgeführte Bremsverfahren weist den Vorteil auf, dass - bei Vorhandensein einer entsprechenden Zapfwellengetriebeanordnung 12 - keine zusätzliche Bremse sowie kein zusätzlicher Aktor benötigt werden, sondern dass die bereits an dem Zapfwellengetriebe 12 vorhandenen Lamellenkupplungen 23, 33 als Bremsen genutzt werden. Die vor dem Auslösen des Bremsvorgangs bevorzugt vorzunehmende Unterbrechung der Antriebsverbindung gegenüber dem Antriebsmotor 3 kann auf verhältnismäßig kostengünstige Weise durch eine kompakt bauende, formschlüssige Kupplung in Form einer Schaltmuffe 6 erfolgen.

Aufgrund der so geschaffenen Möglichkeit des Abbremsens der Zapfwelle 11 mittels des traktorseitigen Zapfwellengetriebes 12 kann vorteilhaft auf eine Bremse am Arbeitsgerät 2 verzichtet werden, da sich dieses über die Zapfwelle 11 mit abbremsen lässt. Somit eignet sich das Zapfwellengetriebe 12 bzw. ein damit ausgestatteter Traktor 1 auch zum Antrieb von Arbeitsgeräten, die trotz hoher Trägheit des Antriebsstrangs nicht über eine eigene Bremse verfügen.

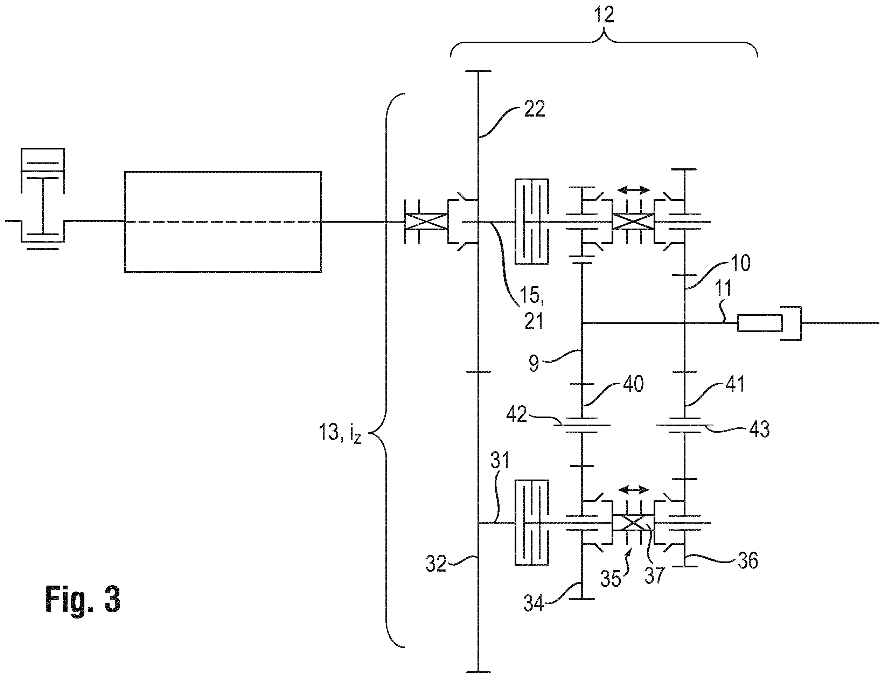

In den Fig. 3 bis 5 sind nun weitere Ausführungsbeispiele für erfindungsgemäße Zapfwellengetriebe 12 gezeigt.

Fig. 3 zeigt ein Zapfwellengetriebe 12 gemäß einem zweiten Ausführungsbeispiel der Erfindung. Das Zapfwellengetriebe 12 gemäß dem zweiten Ausführungsbeispiel entspricht in wesentlichen Merkmalen dem anhand von Fig. 1 erläuterten ersten Ausführungsbeispiel. Zur Vermeidung von Wiederholungen wird daher auf die zu Fig. 1 gemachten Ausführungen verwiesen und wird auf eine Bezeichnung gleichwirkender Elemente in Fig. 3 verzichtet. Davon abweichend umfasst bei dem Zapfwellengetriebe 12 gemäß dem zweiten Ausführungsbeispiel das Zwischengetriebe 13 lediglich ein Zahnrad 22 und ein Zahnrad 32. Folglich können sich die erste Antriebswelle 21 und die zweite Antriebswelle 31 nur gegensinnig drehen. Dafür ist nun den Zahnräder 34 und 36 der zweiten Getriebewelle 37 jeweils ein Zwischenrad 40 (drehbar um Drehachse 42) bzw. ein Zwischenrad 41 (drehbar um Drehachse 43) zugeordnet. Dabei kämmt das Zwischenrad 40 zugleich mit dem Zahnrad 34 der zweiten Getriebewelle 37 und dem Zahnrad 9 der Zapfwelle 11, und kämmt das Zwischenrad 41 zugleich mit dem Zahnrad 36 der zweiten Getriebewelle 37 und dem Zahnrad 10 der Zapfwelle 11. Das Zapfwellengetriebe 12 gemäß dem in Fig. 3 gezeigten zweiten Ausführungsbeispiel entspricht in grundlegenden Funktionen, insbesondere hinsichtlich der Anzahl wählbarer Getriebegangstufen dem ersten Ausführungsbeispiel.

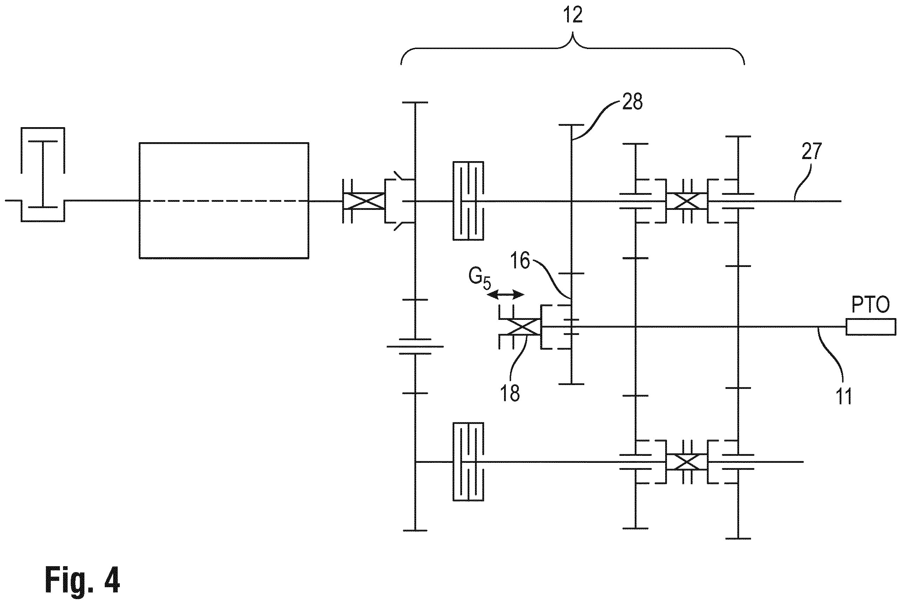

Fig. 4 zeigt ein Zapfwellengetriebe 12 gemäß einem dritten Ausführungsbeispiel der Erfindung. Das Zapfwellengetriebe 12 gemäß dem dritten Ausführungsbeispiel entspricht in wesentlichen Merkmalen dem anhand von Fig. 1 erläuterten ersten Ausführungsbeispiel. Zur Vermeidung von Wiederholungen wird daher auf die zu Fig. 1 gemachten Ausführungen verwiesen und wird auf eine Bezeichnung gleichwirkender Elemente in Fig. 4 verzichtet. Davon abweichend ist bei dem Zapfwellengetriebe 12 gemäß dem dritten Ausführungsbeispiel auf der ersten Getriebewelle 27 ein zusätzliches Zahnrad 28 fest angeordnet. Dieses kämmt mit einem zusätzlichen der Zapfwelle 11 zugeordneten Zahnrad 16, das mittels einer Schaltmuffe 18 gegenüber der Zapfwelle 11 befestigbar und davon lösbar ist. Durch Betätigung der Schaltmuffe 18 lässt sich somit - neben den bereits zum ersten Ausführungsbeispiel beschriebenen Getriebegangstufen G_{1 bis 4} - eine weitere Antriebsverbindung zwischen der ersten Getriebewelle 27 und der Zapfwelle 11 herstellen. Diese weitere Antriebsverbindung stellt somit eine fünfte Getriebegangstufe G₅ dar, die mit dem Zapfwellengetriebe 12 gemäß dem dritten Ausführungsbeispiel verwirklicht wird. In der Praxis könnte diese fünfte Getriebegangstufe G₅ beispielsweise als schneller Sparzapfwellengang (1000e) ausgelegt sein. Vorteilhaft an der konstruktiven Gestaltung ist, dass sich aufgrund der Anordnung der Schaltmuffe 18 auf der Zapfwelle 11 die axiale Baulänge des Zapfwellengetriebes 12 trotz weiterer Getriebegangstufe kaum vergrößert und auch der sonstige Aufbau nicht verändert ist.

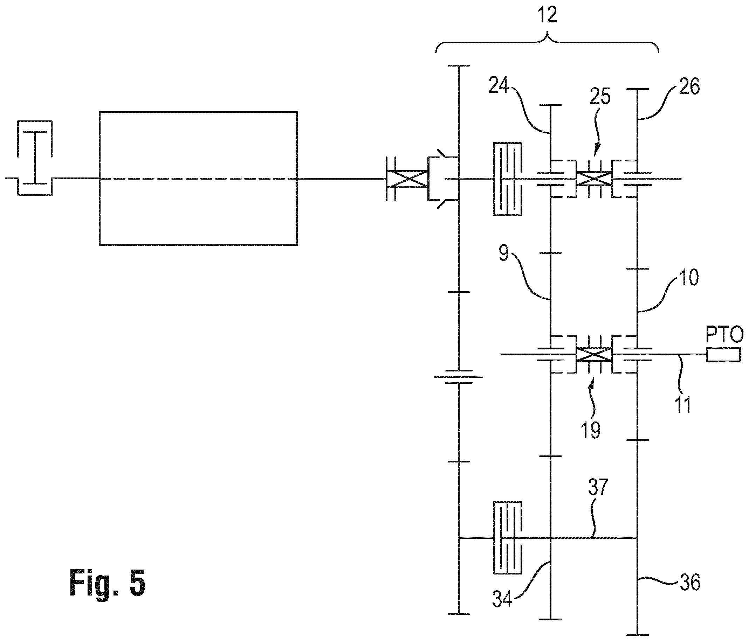

Schließlich zeigt Fig. 5 ein Zapfwellengetriebe 12 gemäß einem vierten Ausführungsbeispiel der Erfindung. Das Zapfwellengetriebe 12 gemäß dem vierten Ausführungsbeispiel entspricht in wesentlichen Merkmalen dem anhand von Fig. 1 erläuterten ersten Ausführungsbeispiel. Zur Vermeidung von Wiederholungen wird daher auf die zu Fig. 1 gemachten Ausführungen verwiesen und wird auf eine Bezeichnung gleichwirkender Elemente in Fig. 5 verzichtet. Davon abweichend sind bei dem Zapfwellengetriebe 12 gemäß dem vierten Ausführungsbeispiel die Zahnräder 34, 36 fest an der zweiten Getriebewelle 37 angeordnet und sind die Zahnräder 9, 10 lösbar an der Zapfwelle 11 angeordnet. Die Zahnräder 9, 10 sind dazu mittels einer Schaltmuffe 19 jeweils gegenüber der Zapfwelle 11 befestigbar bzw. davon lösbar. Mit dem in Fig. 5 gezeigten Zapfwellengetriebe 12 gemäß dem vierten Ausführungsbeispiel lassen sich sechs Getriebegangstufen G_{1 bis 6} teils unter Last schalten. In den sechs Getriebegangstufen G_{1 bis 6} besteht jeweils eine der folgenden Antriebsverbindungen innerhalb des Zapfwellengetriebes 12:
- erster Gang:: Eingangswelle 15/erste Antriebswelle 21 - erste Getriebewelle 27 - Zahnrad 26 - Zahnrad 10 - Zahnrad 36 - zweite Getriebewelle 37 - Zahnrad 34 - Zahnrad 9 - Zapfwelle 11,
- zweiter Gang:: Eingangswelle 15/erste Antriebswelle 21 - Zahnrad 22 - Zwischenrad 7 - Zahnrad 32 - zweite Antriebswelle 31 - zweite Getriebewelle 37 - Zahnrad 34 - Zahnrad 9 - Zapfwelle 11,
- dritter Gang:: Eingangswelle 15/erste Antriebswelle 21 - erste Getriebewelle 27 - Zahnrad 24 - Zahnrad 9 - Zapfwelle 11,
- vierter Gang:: Eingangswelle 15/erste Antriebswelle 21- erste Getriebewelle 27 - Zahnrad 26 - Zahnrad 10 - Zapfwelle 11,
- fünfter Gang:: Eingangswelle 15/erste Antriebswelle 21 - Zahnrad 22 - Zwischenrad 7 - Zahnrad 32 - zweite Antriebswelle 31 - zweite Getriebewelle 37 - Zahnrad 36 - Zahnrad 10 - Zapfwelle 11,
- sechster Gang:: Eingangswelle 15/erste Antriebswelle 21 - erste Getriebewelle 17 - Zahnrad 24 - Zahnrad 9 - Zahnrad 34 - zweite Getriebewelle 37 - Zahnrad 36 - Zahnrad 10 - Zapfwelle 11.

Wie aus den beschriebenen Antriebsverbindungen in den jeweiligen Getriebegangstufen Gₙ ersichtlich, ist es bei dem Zapfwellengetriebe 12 gemäß viertem Ausführungsbeispiel zusätzlich möglich, dass die Antriebsverbindung einer Getriebegangstufe nicht allein über genau eine der Getriebewellen (27 oder 37) und die Zapfwelle 11 hergestellt wird, sondern dass diese über beide Getriebewellen (27 und 37) und die Zapfwelle 11 verläuft. Dazu wird jeweils ein der Zapfwelle 11 zugeordnetes Zahnrad 9 bzw. 10 in einen gegenüber der Zapfwelle 11 losen Zustand gebracht, um in kämmendem Eingriff mit Zahnrädern 24, 34 bzw. 26, 36 beider Getriebewellen 27, 37 Antriebsleistung von einer der Getriebewellen 27, 37 zur jeweils anderen 37, 27 zu übertragen. Das Zapfwellengetriebe 12 gemäß dem vierten Ausführungsbeispiel erzielt damit bei gleicher Anzahl von Zahnrädern - und damit gegenüber dem ersten Ausführungsbeispiel unveränderter Baugröße - eine erhöhte Anzahl schaltbarer Gänge.

Die Erfindung ist anhand verschiedener Ausführungsbeispiele für eine Zapfwellengetriebe im Zusammenhang von Traktoren beschrieben worden. Es sei darauf hingewiesen, dass die Erfindung unter Erzielung vergleichbarer Wirkungen und Vorteile auch an anderen landwirtschaftlichen Arbeitsmaschinen nutzbar ist, die mit einem Zapfwellengetriebe ausgestattet werden können.

### Bezugszeichenliste

- 1: Traktor
- 2: Arbeitsgerät
- 3: Dieselmotor
- 4: Fahrantrieb
- 5: Getriebeantriebswelle
- 6: Schaltmuffe
- 7: Zwischenrad
- 8: Drehachse
- 9: Zahnrad
- 10: Zahnrad
- 11: Zapfwelle
- 12: Zapfwellengetriebe
- 13: Zwischengetriebe
- 14: Antriebswelle (Arbeitsgerät)
- 15: Eingangswelle
- 16: Zahnrad
- 17: Hauptgetriebe
- 18: Schaltmuffe
- 19: Schaltmuffe

- 20: erstes Teilgetriebe
- 21: erste Antriebswelle
- 22: Zahnrad
- 23: erste Lamellenkupplung
- 24: Zahnrad
- 25: Schaltmuffe
- 26: Zahnrad
- 27: erste Getriebewelle
- 28: Zahnrad

- 30: zweites Teilgetriebe
- 31: zweite Antriebswelle
- 32: Zahnrad
- 33: zweite Lamellenkupplung
- 34: Zahnrad
- 35: Schaltmuffe
- 36: Zahnrad
- 37: zweite Getriebewelle

- 40: Zwischenrad
- 41: Zwischenrad
- 42: Drehachse
- 43: Drehachse

- i_{z}: Übersetzungsverhältnis Zwischengetriebe
- Gₙ: Getriebegangstufe

## Patentansprüche

1. Zapfwellengetriebe (12) für eine landwirtschaftliche Arbeitsmaschine, insbesondere für einen Traktor (1), umfassend ein erstes Teilgetriebe (20), dem eine erste Getriebewelle (27) zugeordnet ist, und mindestens ein weiteres Teilgetriebe (30), dem eine von der ersten Getriebewelle (27) beabstandete weitere Getriebewelle (37) zugeordnet ist, wobei jede der Getriebewellen (27, 37) über zumindest eine Getriebegangstufe (Gₙ) mit einer gemeinsamen Zapfwelle (11) in Antriebsverbindung bringbar ist und wobei jede der Getriebewellen (27; 37) durch Schließen einer dem jeweiligen Teilgetriebe (20; 30) zugeordneten Reibkupplung (23; 33) mit einer Eingangswelle (15, 21) des Zapfwellengetriebes (12) in Antriebsverbindung bringbar ist, **dadurch gekennzeichnet, dass** der ersten Getriebewelle (27) mehrere Zahnräder (24, 26) zugeordnet sind, die jeweils mit einem der Zapfwelle (11) zugeordneten Zahnrad (9, 10) kämmen, um als Paar von Zahnrädern (24, 9; 26, 10) je eine schaltbare Getriebegangstufe (Gn) zu bilden, wobei einer weiteren Getriebewelle (37) mehrere Zahnräder (34, 36) zugeordnet sind, die jeweils über ein Zwischenrad (40, 41) mit einem der Zapfwelle (11) zugeordneten Zahnrad (9, 10) kämmen, um als Anordnung von Zahnrädern (34, 40, 9; 36, 41, 10) je eine schaltbare Getriebegangstufe (Gn) zu bilden, wobei zur Vorwahl einer Getriebegangstufe (Gn) das betreffende Zahnrad (24; 26; 34; 36) durch Stellmittel (25; 35) drehfest mit der jeweiligen Getriebewelle (27; 37) verbindbar ist.

2. Zapfwellengetriebe nach Anspruch 1, **dadurch gekennzeichnet, dass** sich das Zapfwellengetriebe (12) unter Last schalten lässt, indem während des Öffnens der Reibkupplung (23; 33) eines Teilgetriebes (20; 30) die jeweils dem anderen Teilgetriebe (30; 20) zugeordnete Reibkupplung (33; 23) geschlossen wird, so dass eine über eines der Teilgetriebe (20; 30) bestehende Antriebsverbindung zwischen Eingangswelle (15, 21) und Zapfwelle (11) durch eine über das jeweils andere Teilgetriebe (30; 20) herzustellende Antriebsverbindung ersetzbar ist, ohne eine Antriebsverbindung zwischen Eingangswelle (15, 21) und Zapfwelle (11) zu unterbrechen.

3. Zapfwellengetriebe nach Anspruch 1 oder 2, **dadurch gekennzeichnet, dass** die erste Getriebewelle (27) mittels der dem ersten Teilgetriebe (20) zugeordneten Reibkupplung (23) mit einer ersten Antriebswelle (21) kuppelbar ist und die weitere Getriebewelle (37) mittels der dem weiteren Teilgetriebe (30) zugeordneten Reibkupplung (33) mit einer weiteren Antriebswelle (31) kuppelbar ist, wobei die erste und die weitere Antriebswelle (21, 31) Teil eines von der Eingangswelle (15) antreibbaren Zwischengetriebes (13) sind.

4. Zapfwellengetriebe nach Anspruch 3, **dadurch gekennzeichnet, dass** es sich bei dem Zwischengetriebe (13) um ein Stirnradgetriebe handelt, bei dem eine erste Welle (21) und eine dazu parallele weitere Welle (31) in einem festen Übersetzungsverhältnis (i_{Z}) zueinander stehen, bei insbesondere gleichem Drehsinn der Wellen (21, 31).

5. Zapfwellengetriebe nach Anspruch 4, **dadurch gekennzeichnet, dass** das Übersetzungsverhältnis (i_{Z}) zwischen der ersten Welle (21) und der weiteren Welle (31) ungleich 1 ist.

6. Zapfwellengetriebe nach einem der vorigen Ansprüche, **dadurch gekennzeichnet, dass** der ersten und der weiteren Getriebewelle (27; 37) jeweils zumindest ein Zahnrad (24, 26, 28; 34, 36) zugeordnet ist, das mit einem der Zapfwelle (11) zugeordneten Zahnrad (9, 10, 16) kämmt, so dass zwischen der Zapfwelle (11) und der jeweiligen Getriebewelle (27; 37) ein festes Drehzahlverhältnis im Sinne einer Gangstufe (Gₙ) herstellbar ist.

7. Zapfwellengetriebe nach einem der vorigen Ansprüche, **dadurch gekennzeichnet, dass** jede der Getriebewellen (27; 37) über mehrere, vorzugsweise über jeweils zwei oder drei schaltbare Getriebegangstufen (Gₙ) mit der gemeinsamen Zapfwelle (11) in Antriebsverbindung bringbar ist.

8. Zapfwellengetriebe nach einem der vorigen Ansprüche, **dadurch gekennzeichnet, dass** der ersten Getriebewelle (27) mehrere Zahnräder (24, 26; 28) zugeordnet sind, die jeweils mit einem der Zapfwelle (11) zugeordneten Zahnrad (9, 10; 16) kämmen, um als Paar von Zahnrädern (24, 9; 26, 10; 28, 16) je eine schaltbare Getriebegangstufe (Gₙ) zu bilden, wobei zur Vorwahl einer Getriebegangstufe (Gₙ) das betreffende Zahnrad (24; 26; 16) durch Stellmittel (25; 18) drehfest mit der Getriebewelle (27) und/oder der Zapfwelle (11) verbindbar ist.

9. Zapfwellengetriebe nach einem der Ansprüche 1 bis 7, **dadurch gekennzeichnet, dass** der ersten Getriebewelle (27) mehrere Zahnräder (24, 26) zugeordnet sind, die jeweils mit einem der Zapfwelle (11) zugeordneten Zahnrad (9, 10) kämmen, wobei zur Vorwahl einer Getriebegangstufe (Gₙ) ein oder mehrere der Zahnräder (24; 26; 9; 10) durch Stellmittel (25; 19) drehfest mit der Getriebewelle (27) und/oder der Zapfwelle (11) verbindbar ist, um als Anordnung von Zahnrädern (24, 26, 9, 10) eine schaltbare Getriebegangstufe (Gₙ) zu bilden.

10. Zapfwellengetriebe nach einem der vorigen Ansprüche, **dadurch gekennzeichnet, dass** es sich bei zumindest einigen der den Teilgetrieben (20, 30) zugeordneten Maschinenelementen, insbesondere bei den Eingangswellen (21, 31), den Zahnrädern (22, 32), den Reibkupplungen (23, 33), den Getriebewellen (27, 37), den Zahnrädern (24, 26, 34, 36) und/oder den Schaltmuffen (25, 35) um Gleichteile handelt.

11. Landwirtschaftliche Arbeitsmaschine, insbesondere Traktor (1), mit einem Antriebsmotor (3) und einem Zapfwellengetriebe (12) gemäß einem der vorigen Ansprüche, wobei das Zapfwellengetriebe (12) über eine Getriebeantriebswelle (5) von dem Antriebsmotor (3) antreibbar ist.

12. Landwirtschaftliche Arbeitsmaschine nach Anspruch 11, **dadurch gekennzeichnet, dass** zwischen der Getriebeantriebswelle (5) und der Eingangswelle (15) des Zapfwellengetriebes (12), bei welcher es sich insbesondere um die erste Antriebswelle (21) handelt, eine Kupplung, insbesondere eine formschlüssig arbeitende Kupplung wie eine Schaltmuffe (6) oder dergleichen angeordnet ist.

13. Kombination aus einer Arbeitsmaschine (1) nach Anspruch 11 oder 12 und einem mit der Zapfwelle (11) des Zapfwellengetriebes (12) in Antriebsverbindung stehenden Arbeitsgerät (2).

14. Kombination nach Anspruch 13, **dadurch gekennzeichnet, dass** das Zapfwellengetriebe (12) zum Anfahren eines im Stillstand befindlichen Arbeitsgeräts (2) betreibbar ist, bei jeweils vorgewählter Getriebegangstufe (Gₙ) in jedem der Teilgetriebe (20, 30) gleichzeitig die Reibkupplungen (23, 33) zu schließen, um über eine Reibkupplung (23) ein Drehmoment von der ersten Antriebswelle (21) auf die erste Getriebewelle (27) und um über eine Reibkupplung (33) ein Drehmoment von der weiteren Antriebswelle (31) auf die weitere Getriebewelle (37) zu übertragen, spätestens bis an einer der Reibkupplungen (23, 33) ein Gleichlauf erreicht ist.

15. Verfahren zum Bremsen einer Zapfwelle (11) einer landwirtschaftlichen Arbeitsmaschine, insbesondere einer Arbeitsmaschine nach Anspruch 11 oder 12, mit den Schritten:
Unterbrechen einer Antriebsverbindung zwischen der Zapfwelle (11) und einem Antriebsmotor (3) der Arbeitsmaschine (1), und **gekennzeichnet durch**
gleichzeitiges Kuppeln einer mit der Zapfwelle (11) in festem Drehzahlverhältnis stehenden ersten Getriebewelle (27) und einer mit der Zapfwelle (11) in festem Drehzahlverhältnis stehenden weiteren Getriebewelle (37) an ein Zwischengetriebe (13), das ein vom Drehzahlverhältnis der Getriebewellen (27, 37) untereinander abweichendes Übersetzungsverhältnis (i_{z}) aufweist.

16. Verfahren nach Anspruch 15, **dadurch gekennzeichnet, dass** die Zapfwelle (11) den Getriebeausgang eines mehrere, insbesondere zwei Teilgetriebe (20, 30) umfassenden Mehrkupplungsgetriebes (12) bildet.

17. Verfahren nach Anspruch 15 oder 16, **dadurch gekennzeichnet, dass** zum gleichzeitigen Kuppeln zeitgleich die erste Getriebewelle (27) mit einer ersten Welle (21) und die weitere Getriebewelle (37) mit einer weiteren Welle (31) gekuppelt werden, wobei die Wellen (21, 31) Teil des Zwischengetriebes (13) sind und im festen Übersetzungsverhältnis (i_{z}) zueinander stehen.

18. Verfahren nach Anspruch 17, **dadurch gekennzeichnet, dass** der gleichzeitige Kupplungsvorgang durch gleichzeitiges Schließen einer zwischen der ersten Welle (21) und der ersten Getriebewelle (27) wirkenden Reibkupplung (23) und einer zwischen der weiteren Welle (31) und der weiteren Getriebewelle (37) wirkenden Reibkupplung (33) durchgeführt wird.

19. Verfahren nach einem der Ansprüche 15 bis 18, **dadurch gekennzeichnet, dass** zum Unterbrechen der Antriebsverbindung zwischen Zapfwelle (11) und Antriebsmotor (3) eine zwischen dem Antriebsmotor (3) und dem Mehrkupplungsgetriebe (12) angeordnete Kupplung, insbesondere eine formschlüssig arbeitende Kupplung wie eine Schaltmuffe (6) oder dergleichen, geöffnet wird.

## Claims

1. A power take-off transmission (12) for an agricultural working machine, in particularly for a tractor (1), including a first sub-transmission (20) with which a first transmission shaft (27) is associated, and at least one further sub-transmission (30) with which a further transmission shaft (37) spaced from the first transmission shaft (27) is associated, wherein each of the transmission shafts (27, 37) can be brought into driving connected relationship by way of at least one transmission gear stage (Gₙ) with a common power take-off shaft (11) and wherein each of the transmission shafts (27, 37) can be brought into driving connected relationship with an input shaft (15, 21) of the power take-off transmission (12) by closing a friction clutch (23, 33) associated with the respective sub-transmission (20, 30), **characterised in that** associated with the first transmission shaft (27) are a plurality of gears (24, 26) which respectively mesh with a gear (9, 10) associated with the power take-off shaft (11) in order as a pair of gears (24, 9; 26, 10) to form a shiftable transmission gear stage (Gₙ), wherein associated with a further transmission shaft (37) are a plurality of gears (34, 36) which respectively mesh by way of an intermediate gear (40, 41) with a gear (9, 10) associated with the power take-off shaft (11) in order as an arrangement of gears (34, 40, 9; 36, 41, 10) to form a respective shiftable transmission gear stage (Gₙ), wherein for preselection of a transmission gear stage (Gₙ) the gear (24; 26; 34; 36) in question can be non-rotatably connected by adjusting means (25; 35) to the respective transmission shaft (27; 37).

2. A power take-off transmission according to claim 1 **characterised in that** the power take-off transmission (12) can be shifted under load **in that** during opening of the friction clutch (23; 33) of a sub-transmission (20; 30) the friction clutch (33; 23) respectively associated with the other sub-transmission (30; 20) is closed so that a driving connection by way of one of the sub-transmissions (20; 30) between the input shaft (15, 21) and the power take-off shaft (11) can be replaced by a driving connection to be implemented by way of the respective other sub-transmission (30; 20) without interrupting a driving connection between the input shaft (15, 21) and the power take-off shaft (11).

3. A power take-off transmission according to claim 1 or claim 2 **characterised in that** the first transmission shaft (27) can be coupled to the first drive shaft (21) by means of the friction clutch (23) associated with the first sub-transmission (20) and the further transmission shaft (37) can be coupled to a further drive shaft (31) by means of the friction clutch (33) associated with the further sub-transmission (30), wherein the first and the further drive shafts (21, 31) are part of an intermediate transmission (13) drivable by the input shaft (15).

4. A power take-off transmission according to claim 3 **characterised in that** the intermediate transmission (13) is a spur gear transmission in which a first shaft (21) and a further shaft (31) parallel thereto are in a fixed transmission ratio (i_{z}) relative to each other, with in particular the same direction of rotation of the shafts (21, 31).

5. A power take-off transmission according to claim 4 **characterised in that** the transmission ratio (i_{z}) between the first shaft (21) and the further shaft (31) is different from 1.

6. A power take-off transmission according to one of the preceding claims **characterised in that** associated with the first and the further transmission shafts (27; 37) is at least one respective gear (24, 26, 28; 34, 36) meshing with a gear (9, 10, 16) associated with the power take-off shaft (11) so that a fixed rotary speed ratio in the sense of a gear stage (Gₙ) can be produced between the power take-off shaft (11) and the respective transmission shaft (27; 37).

7. A power take-off transmission according to one of the preceding claims **characterised in that** each of the transmission shafts (27; 37) can be brought into driving connected relationship with the common power take-off shaft (11) by way of a plurality of and preferably by way of two or three shiftable transmission gear stages (Gₙ).

8. A power take-off transmission according to one of the preceding claims **characterised in that** associated with the first transmission shaft (27) are a plurality of gears (24, 26; 28) which respectively mesh with a gear (9, 10; 16) associated with the power take-off shaft (11) in order as a pair of gears (24, 9; 26, 10; 28, 16) to form a respective shiftable transmission gear stage (Gₙ) wherein for preselection of a transmission gear stage (Gₙ) the gear (24; 26; 16) in question can be non-rotatably connected by adjusting means (25; 18) to the transmission shaft (27) and/or the power take-off shaft (11).

9. A power take-off transmission according to one of claims 1 to 7 **characterised in that** associated with the first transmission shaft (27) are a plurality of gears (24, 26) which respectively mesh with a gear (9, 10) associated with the power take-off shaft (11), wherein for preselection of a transmission gear stage (Gₙ) one or more of the gears (24; 26; 9; 10) can be non-rotatably connected to the transmission shaft (27) and/or the power take-off shaft (11) by adjusting means (25; 19) in order as an arrangement of gears (24, 26, 9, 10) to form a shiftable transmission gear stage (Gₙ).

10. A power take-off transmission according to one of the preceding claims **characterised in that** at least some of the machine components associated with the sub-transmissions (20, 30), in particular the input shafts (21, 31), the gears (22, 32), the friction clutches (23, 33), the transmission shafts (27, 37), the gears (24, 26, 34, 36) and/or the shift sleeves (25, 35) are identical parts.

11. An agricultural working machine, in particularly a tractor (1) having a drive engine (3) and a power take-off transmission (12) according to one of the preceding claims, wherein the power take-off transmission (12) is drivable by the drive engine (3) by way of a transmission drive shaft (5).

12. An agricultural working machine according to claim 11 **characterised in that** arranged between the transmission drive shaft (5) and the input shaft (15) of the power take-off transmission (12) which is in particular the first drive shaft (21) is a clutch, in particular a clutch which operates in positively locking relationship like a shift sleeve (6) or the like.

13. A combination comprising a working machine (1) according to claim 11 or claim 12 and a working implement (2) in driving connected relationship to the power take-off shaft (11) of the power take-off transmission (12).

14. A combination according to claim 13 **characterised in that** for starting a working implement (12) which is in a stopped condition a power take-off transmission (12) is operable at a respective preselected transmission gear stage (Gₙ) to simultaneously close the friction clutches (23, 33) in each of the sub-transmissions (20, 30) in order to transmit a torque from the first drive shaft (21) to the first transmission shaft (27) by way of a friction clutch (23) and to transmit a torque from the further drive shaft (31) to the further transmission shaft (37) by way of a friction clutch (33), at latest until synchronism is achieved at one of the friction clutches (23, 33).

15. A method of braking a power take-off shaft (11) of an agricultural working machine, in particular a working machine according to claim 11 or claim 12, comprising the steps:
- interrupting a driving connection between the power take-off shaft (11) and a drive engine (3) of the working machine (1), and **characterised by**
- simultaneously coupling of a first transmission shaft (27) which is in a fixed rotary speed ratio with the power take-off shaft (11) and a further transmission shaft (37) which is in a fixed rotary speed ratio with the power take-off shaft (11) to an intermediate transmission (13) having a transmission ratio (i_{z}) differing from the rotary speed ratio of the transmission shafts (27, 37) with each other.

16. A method according to claim 15 **characterised in that** the power take-off shaft (11) forms the transmission output of a multi-clutch transmission (12) including a plurality of and in particular two sub-transmissions (20, 30).

17. A method according to claim 15 or claim 16 **characterised in that** for simultaneous coupling at the same time the first transmission shaft (27) is coupled to a first shaft (21) and the further transmission shaft (37) is coupled to a further shaft (31), wherein the shafts (21, 31) are part of the intermediate transmission (13) and are in the fixed transmission ratio (i_{z}) with each other.

18. A method according to claim 17 **characterised in that** the simultaneous coupling operation is carried out by simultaneously closing a friction clutch (23) operating between the first shaft (21) and the first transmission shaft (27) and a friction clutch (33) operating between the further shaft (31) and the further transmission shaft (37).

19. A method according to one of claims 15 to 18 **characterised in that** to interrupt the driving connection between the power take-off shaft (11) and the drive engine (3) a clutch arranged between the drive engine (3) and the multi-clutch transmission (12), in particular a clutch which operates in positively locking relationship like a shift sleeve (6) or the like, is opened.

## Revendications

1. Transmission de prise de force (12) pour une machine de travail agricole, en particulier pour un tracteur (1), comprenant une première transmission partielle (20), à laquelle est associé un premier arbre de transmission (27), et au moins une transmission partielle supplémentaire (30), à laquelle est associé un arbre de transmission supplémentaire (37) distant du premier arbre de transmission (27), chacun des arbres de transmission (27, 37) pouvant être amené en liaison d'entraînement avec une prise de force commune (11) par l'intermédiaire d'au moins un étage de transmission (Gₙ), et chacun des arbres de transmission (27 ; 37) pouvant être amené en liaison d'entraînement avec un arbre d'entrée (15, 21) de la transmission de prise de force (12) par la fermeture d'un embrayage à friction (23 ; 33) associé à la transmission partielle respective (20 ; 30), **caractérisée en ce qu'**au premier arbre de transmission (27) sont associées plusieurs roues dentées (24, 26) qui s'engrènent respectivement avec une roue dentée (9, 10) associée à la prise de force (11) pour former chacune, en tant que paire de roues dentées (24, 9 ; 26, 10), un étage de transmission débrayable (Gₙ), à un arbre de transmission supplémentaire (37) étant associées plusieurs roues dentées (34, 36) qui, par l'intermédiaire d'une roue intermédiaire (40, 41), s'engrènent respectivement avec une roue dentée (9, 10) associée à la prise de force (11) pour former chacune, en tant qu'agencement de roues dentées (34, 40, 9 ; 36, 41, 10), un étage de transmission débrayable (Gₙ), la roue dentée concernée (24 ; 26 ; 34 ; 36) pouvant être solidarisée en rotation à l'arbre de transmission respectif (27 ; 37) par l'intermédiaire de moyens actionneurs (25 ; 35) pour présélectionner un étage de transmission (Gₙ).

2. Transmission de prise de force selon la revendication 1, **caractérisée en ce que** la transmission de prise de force (12) peut être mise en prise sous charge par le fait que, pendant l'ouverture de l'embrayage à friction (23 ; 33) d'une transmission partielle (20 ; 30), l'embrayage à friction (33 ; 23) associé à l'autre transmission partielle (30 ; 20) est fermé, de sorte qu'une liaison d'entraînement, créée par l'intermédiaire d'une des transmissions partielles (20 ; 30), entre l'arbre d'entrée (15, 21) et la prise de force (11) est remplaçable par une liaison d'entraînement à établir par l'intermédiaire de l'autre transmission partielle respective (30 ; 20) sans interrompre une liaison d'entraînement entre l'arbre d'entrée (15, 21) et la prise de force (11).

3. Transmission de prise de force selon la revendication 1 ou 2, **caractérisée en ce que** le premier arbre de transmission (27) est couplable, au moyen de l'embrayage à friction (23) associé à la première transmission partielle (20), à un premier arbre d'entraînement (21), et l'arbre de transmission supplémentaire (37) est couplable, au moyen de l'embrayage à friction (33) associé à la transmission partielle supplémentaire (30), à un arbre d'entraînement supplémentaire (31), le premier arbre d'entraînement et l'arbre d'entraînement supplémentaire (21, 31) faisant partie d'une transmission intermédiaire (13) entraînable par l'arbre d'entrée (15).

4. Transmission de prise de force selon la revendication 3, **caractérisée en ce que** la transmission intermédiaire (13) est un engrenage à roues droites dans lequel un premier arbre (21) et un arbre supplémentaire (31) parallèle à celui-ci se trouvent l'un par rapport à l'autre dans un rapport de multiplication fixe (i_{z}) en présence, en particulier, d'un sens de rotation identique des arbres (21, 31).

5. Transmission de prise de force selon la revendication 4, **caractérisée en ce que** le rapport de multiplication (i_{z}) entre le premier arbre (21) et l'arbre supplémentaire (31) est différent de 1.

6. Transmission de prise de force selon une des revendications précédentes, **caractérisée en ce qu'**au premier arbre de transmission et à l'arbre de transmission supplémentaire (27 ; 37) est associée respectivement une roue dentée (24, 26, 28 ; 34, 36) qui s'engrène avec une roue dentée (9, 10, 16) associée à la prise de force (11), de sorte qu'entre la prise de force (11) et l'arbre de transmission respectif (27 ; 37) peut s'établir un rapport de vitesse de rotation fixe sous la forme d'un étage (Gₙ).

7. Transmission de prise de force selon une des revendications précédentes, **caractérisée en ce que** chacun des arbres de transmission (27 ; 37) peut être amené en liaison d'entraînement avec la prise de force commune (11) par l'intermédiaire de plusieurs étages de transmission embrayables (Gₙ), de préférence au nombre respectivement de deux ou trois.

8. Transmission de prise de force selon une des revendications précédentes, **caractérisée en ce qu'**au premier arbre de transmission (27) sont associées plusieurs roues dentées (24, 26 ; 28) qui s'engrènent respectivement avec une roue dentée (9, 10 ; 16) associée à la prise de force (11) pour former chacune, en tant que paire de roues dentées (24, 9 ; 26, 10 ; 28, 16), un étage de transmission débrayable (Gₙ), la roue dentée concernée (24 ; 26 ; 16) pouvant être solidarisée en rotation à l'arbre de transmission respectif (27) et/ou à la prise de force (11) par l'intermédiaire de moyens actionneurs (25 ; 18) pour présélectionner un étage de transmission (Gₙ) .

9. Transmission de prise de force selon une des revendications 1 à 7, **caractérisée en ce qu'**au premier arbre de transmission (27) sont associées plusieurs roues dentées (24, 26) qui s'engrènent respectivement avec une roue dentée (9, 10) associée à la prise de force (11), une ou plusieurs des roues dentées (24 ; 26 ; 9 ; 10) pouvant être solidarisées en rotation à l'arbre de transmission (27) et/ou à la prise de force (11) par l'intermédiaire de moyens actionneurs (25 ; 19) pour présélectionner un étage de transmission (Gₙ), afin de former, en tant qu'agencement de roues dentées (24, 26, 9, 10), un étage de transmission débrayable (Gₙ).

10. Transmission de prise de force selon une des revendications précédentes, **caractérisée en ce qu'**au moins certains des éléments mécaniques associés aux transmissions partielles (20, 30), en particulier les arbres d'entrée (21, 31), les roues dentées (22, 32), les embrayages à friction (23, 33), les arbres de transmission (27, 37), les roues dentées (24, 26, 34, 36) et/ou les manchons de commande (25, 35), sont constitués par des composants invariants.

11. Machine de travail agricole, en particulier tracteur (1), comprenant un moteur d'entraînement (3) et une transmission de prise de force (12) selon une des revendications précédentes, la transmission de prise de force (12) étant entraînable par le moteur d'entraînement (3) par l'intermédiaire d'un arbre d'entraînement de transmission (5).

12. Machine de travail agricole selon la revendication 11, **caractérisée en ce qu'**entre l'arbre d'entraînement de transmission (5) et l'arbre d'entrée (15) de la transmission de prise de force (12), lequel est constitué en particulier par le premier arbre d'entraînement (21), est disposé un moyen d'accouplement, en particulier un moyen d'accouplement fonctionnant par complémentarité de formes comme un manchon de commande (6) ou analogue.

13. Combinaison d'une machine de travail (1) selon la revendication 11 ou 12 et d'un outil de travail (2) en liaison d'entraînement avec la prise de force (11) de la transmission de prise de force (12).

14. Combinaison selon la revendication 13, **caractérisée en ce que** la transmission de prise de force (12) est exploitable pour accoster un outil de travail (2) se trouvant à l'arrêt, afin de fermer simultanément les embrayages à friction (23, 33) dans chacune des transmissions partielles (20, 30) avec l'étage de transmission respectif (Gₙ) sélectionné, afin de transmettre, par l'intermédiaire d'un embrayage à friction (23), un moment de rotation du premier arbre d'entraînement (21) au premier arbre de transmission (27) et, par l'intermédiaire d'un embrayage à friction (33), un moment de rotation de l'arbre d'entraînement supplémentaire (31) à l'arbre de transmission supplémentaire (37), au plus tard avant qu'une rotation de même sens soit atteinte au niveau d'un des embrayages à friction (23, 33).

15. Procédé de freinage d'une prise de force (11) d'une machine de travail agricole, en particulier d'une machine de travail selon la revendication 11 ou 12, comprenant les étapes suivantes :
interruption d'une liaison d'entraînement entre la prise de force (11) et un moteur d'entraînement (3) de la machine de travail (1), et **caractérisé par**
un couplage simultané d'un premier arbre de transmission (27) en rapport de vitesse de rotation fixe avec la prise de force (11) et d'un arbre de transmission supplémentaire (37) en rapport de vitesse de rotation fixe avec la prise de force (11) au niveau d'une transmission intermédiaire (13) qui présente un rapport de multiplication (i_{z}) différent du rapport de vitesse de rotation des arbres de transmission (27, 37) .

16. Procédé selon la revendication 15, **caractérisé en ce que** la prise de force (11) forme la sortie de transmission d'une transmission multi-embrayage (12) comportant plusieurs, en particulier deux, transmissions partielles (20, 30) .

17. Procédé selon la revendication 15 ou 16, **caractérisé en ce que**, pour le couplage simultané, le premier arbre de transmission (27) est couplé au premier arbre (21) et, simultanément, l'arbre de transmission supplémentaire (37) est couplé à l'arbre supplémentaire (31), les arbres (21, 31) faisant partie de la transmission intermédiaire (13) et se trouvant en rapport de multiplication fixe (i_{z}) l'un avec l'autre.

18. Procédé selon la revendication 17, **caractérisé en ce que** le couplage simultané s'effectue par fermeture simultanée d'un embrayage à friction (23) agissant entre le premier arbre (21) et le premier arbre de transmission (27) et d'un embrayage à friction (33) agissant entre l'arbre supplémentaire (31) et l'arbre de transmission supplémentaire (37).

19. Procédé selon une des revendications 15 à 18, **caractérisé en ce que**, pour interrompre la liaison d'entraînement entre la prise de force (11) et le moteur d'entraînement (3), un moyen d'accouplement disposé entre le moteur d'entraînement (3) et la transmission multi-embrayage (12), en particulier un moyen d'accouplement fonctionnant par complémentarité de formes comme un manchon de commande (6) ou analogue, est ouvert.
